(19)

Europäisches
Patentamt
European
Patent Office
Office européen
des brevets

(11) **EP 3 659 785 A1**

(12) **EUROPEAN PATENT APPLICATION**

(43) Date of publication:
**03.06.2020 Bulletin 2020/23**

(21) Application number: **19205250.4**

(22) Date of filing: **25.10.2019**

(51) Int Cl.:
*B29C 64/153* (2017.01)      *B33Y 10/00* (2015.01)
*B33Y 30/00* (2015.01)      *B33Y 70/10* (2020.01)
*C08K 3/34* (2006.01)      *C08L 53/00* (2006.01)
*C08L 23/12* (2006.01)      *B29C 70/58* (2006.01)
*B29K 509/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.11.2018   JP 2018223415
22.05.2019   JP 2019095855**

(71) Applicant: **Ricoh Company, Ltd.
Tokyo 143-8555 (JP)**

(72) Inventors:
• **NARUSE, Mitsuru
   Tokyo, 143-8555 (JP)**
• **SAITO, Akira
   Tokyo, 143-8555 (JP)**
• **IWATSUKI, Hitoshi
   Tokyo, 143-8555 (JP)**
• **YAMASHITA, Yasuyuki
   Tokyo, 143-8555 (JP)**

• **IIDA, Sohichiroh
   Tokyo, 143-8555 (JP)**
• **AMAN, Yasutomo
   Tokyo, 143-8555 (JP)**
• **MUTOH, Toshiyuki
   Tokyo, 143-8555 (JP)**
• **KAMODA, Kiichi
   Tokyo, 143-8555 (JP)**
• **HIGUCHI, Shinzo
   Tokyo, 143-8555 (JP)**
• **OGAWA, Satoshi
   Tokyo, 143-8555 (JP)**
• **SUN, Yunsheng
   Tokyo, 143-8555 (JP)**
• **ISEKI, Toshiyuki
   Tokyo, 143-8555 (JP)**

(74) Representative: **SSM Sandmair
Patentanwälte Rechtsanwalt
Partnerschaft mbB
Joseph-Wild-Straße 20
81829 München (DE)**

(54)   **POWDER FOR FORMING THREE-DIMENSIONAL OBJECT, FORMING DEVICE, FORMING METHOD, AND POWDER**

(57)    A powder for forming a three-dimensional object, the powder comprising: thermoplastic resin particles; and a filling material including silicon dioxide as one of main components, wherein a ratio of mass of silicon dioxide to total mass of the main components in the filling material is 0.630 or more.

## FIG. 1

EP 3 659 785 A1

**Description**

BACKGROUND OF THE INVENTION

Field of the Invention

The present invention relates to a powder for forming a three-dimensional object, a forming device, a forming method, and a powder.

Description of the Related Art

Conventionally, many powders for forming a three-dimensional object have been used as raw materials of objects or molded products that are plastic products. Examples of the powders for forming a three-dimensional object include pellets with the size in the millimeter order and powders with the size in the micrometer order. These powders are melted to be used in, for example, the injection molding and the extrusion molding. In recent years, they are used in 3D printers such as the powder bed fusion system.
It is known that when a melted resin composition is molded by injecting it in a die, an inorganic reinforcing agent such as talc is included in the resin composition as a means for improving mechanical strength of the molded product (for example, Japanese Unexamined Patent Application Publication No. 2016-16568).

SUMMARY OF THE INVENTION

According to one aspect, the present disclosure has an object to provide a powder for forming a three-dimensional object that can improve strength in a lamination direction of the three-dimensional object and precision of forming.
As a means for achieving the aforementioned object, a powder for forming a three-dimensional object of the present disclosure includes: thermoplastic resin particles; and a filling material including silicon dioxide as one of main components.
A ratio of mass of silicon dioxide to total mass of the main components in the filling material is 0.630 or more.
According to the present disclosure, it is possible to provide a powder for forming a three-dimensional object that can improve strength in a lamination direction of the three-dimensional object and precision of forming.

BRIEF DESCRIPTION OF THE DRAWINGS

FIG. 1 is a schematic diagram presenting a forming device according to one embodiment of the present disclosure.
FIG. 2A is a schematic diagram presenting a forming method of a three-dimensional object according to one embodiment of the present disclosure.
FIG. 2B is a schematic diagram presenting a forming method of a three-dimensional object according to one embodiment of the present disclosure.
FIG. 3A is a schematic diagram presenting a forming method of a three-dimensional object according to one embodiment of the present disclosure.
FIG. 3B is a schematic diagram presenting a forming method of a three-dimensional object according to one embodiment of the present disclosure.

DESCRIPTION OF THE EMBODIMENTS

A powder of the present disclosure for forming a three-dimensional object includes thermoplastic resin particles; and a filling material including silicon dioxide as one of main components, wherein a ratio of mass of silicon dioxide to total mass of the main components in the filling material is 0.630 or more.
A powder of the present disclosure for forming a three-dimensional object is based on the finding that the conventional powders for forming a three-dimensional object may be deteriorated in strength in a lamination direction of the three-dimensional object and precision of forming in some cases. Specifically, it is based on the finding that the strength in a lamination direction of the three-dimensional object and the precision of forming may be deteriorated in some cases, even when talc and the like is included as an inorganic reinforcing agent in order to improve strength of the three-dimensional object in the conventional powders for forming a three-dimensional object.
This problem is particularly remarkably found when a 3D printer such as the powder bed fusion (PBF) system is used to form a three-dimensional object. In the 3D printer such as the PBF system, a three-dimensional object is formed by forming a formation layer including the powder for forming a three-dimensional object and then laminating the formation layers formed. Therefore, when the 3D printer such as the PBF system is used to form a three-dimensional object, adhesive strength (fusion) between the formation layers in the lamination direction was particularly weaker than adhesive strength in another direction. This problem cannot be solved even when the powder for forming a three-dimensional object includes talc and the like as the inorganic reinforcing agent described in Japanese Unexamined Patent Application Publication No. 2016-16568.

As a result of diligent studies performed by the present inventors for the purpose of improving the strength in a lamination direction of the three-dimensional object and the precision of forming, a powder for forming a three-dimensional object capable of solving the aforementioned problem was found. That is, the present inventors found that the aforementioned problem can be solved by a powder for forming a three-dimensional object, the powder including: thermoplastic resin particles; and a filling material including silicon dioxide as one of main components, a ratio of mass of silicon dioxide to total mass of the main components in the filling material being 0.630 or more.

Compared to the filling materials in the conventional powders for forming a three-dimensional object (for example, the inorganic reinforcing agent described in Japanese Unexamined Patent Application Publication No. 2016-16568), the filling material in the powder of the present disclosure for forming a three-dimensional object has a higher rate of silicon dioxide. Therefore, because the powder of the present disclosure for forming a three-dimensional object is improved in dispersibility of the filling material with respect to a thermoplastic resin, the filling material easily uniformly exists with respect to the thermoplastic resin particles, which can maintain uniformity of strength within the three-dimensional object. It is believed that because the three-dimensional object formed by using the powder of the present disclosure for forming a three-dimensional object does not have nonuniformity of strength and weakened portions in terms of strength hardly occur, which makes it possible to improve the strength in a lamination direction of the three-dimensional object.

Moreover, it is believed that because the filling material in the powder of the present disclosure for forming a three-dimensional object has a higher rate of silicon dioxide, compatibility with the thermoplastic resin is improved, which can improve adhesive strength between the filling material exposed on the surface of a formation layer and a formation layer that is newly formed on the formation layer. Therefore, it is believed that the powder of the present disclosure for forming a three-dimensional object can improve the strength in a lamination direction of the three-dimensional object.

Moreover, the filling material easily uniformly exists with respect to the thermoplastic resin particles in the powder of the present disclosure for forming a three-dimensional object. Therefore, it is possible to make the resin contraction (molding contraction) uniform when the three-dimensional object is formed, and the formation layers can be closely adhesive, which makes it possible to improve three-dimensional object in the precision of forming.

(Powder for forming three-dimensional object)

The powder of the present disclosure for forming a three-dimensional object includes at least thermoplastic resin particles and a filling material including silicon dioxide as one of main components, and further includes other components if necessary.

<Thermoplastic resin particles>

The thermoplastic resin particles mean particles including a thermoplastic resin.

A material of the thermoplastic resin particles includes, for example, a thermoplastic resin as a resin component and a resin composition including other components if necessary.

-Thermoplastic resin-

The thermoplastic resin means a resin that is plasticized upon application of heat, followed by melting.

The thermoplastic resin is not particularly limited and may be appropriately selected depending on the intended purpose. Examples thereof include crystalline resins, amorphous resins, and liquid crystal resins. Preferable examples of the thermoplastic resin include crystalline resins and liquid crystal resins. As the thermoplastic resin, a resin having a large difference between a fusion start temperature and a recrystallization temperature upon cooling is preferable.

Note that, the crystalline resin is a resin in which a peak of the melting point is detected in the measurement according to ISO3146 (method for measuring plastic transition temperature, JIS K7121).

Examples of the thermoplastic resin include polyolefin, polyamide, polyester, polyether, polyphenylene sulfide, liquid crystal polymer (LCP), polyacetal (POM: polyoxymethylene), polyimide, and fluororesins. These may be used alone or in combination.

Examples of the polyolefin include polyethylene (PE) and polypropylene (PP).

Examples of the polyamide include: polyamide 410 (PA410), polyamide 6 (PA6), polyamide 66 (PA66), polyamide 610 (PA610), polyamide 612 (PA612), polyamide 11 (PA11), and polyamide 12 (PA12); and semi-aromatic polyamide such as polyamide 4T (PA4T), polyamide MXD6 (PAMXD6), polyamide 6T (PA6T), polyamide 9T (PA9T), and polyamide 10T (PA10T).

Note that, PA9T, which is also called polynonamethylene terephthalamide, includes C9-diamine and a terephthalic acid monomer and is a semi-aromatic compound having an aromatic compound at a side of carboxylic acid. The polyamide also includes aramid formed of p-phenylenediamine and a terephthalic acid monomer as a wholly aromatic compound in which aromatic compounds are included not only at a side of carboxylic acid but also at a side of diamine.

Examples of the polyester include polyethylene terephthalate (PET), polybutadiene terephthalate (PBT), and polylactic acid (PLA). Among them, in order to impart heat resistance, those that include an aromatic compound partially including terephthalic acid or isophthalic acid are preferable.

Examples of the polyether include polyarylketone and polyethersulfone.

Examples of the polyarylketone include polyetheretherketone (PEEK), polyetherketone (PEK), polyetherketoneketone (PEKK), polyaryletherketone (PAEK), polyetheretherketoneketone (PEEKK), and polyetherketoneetherketoneketone (PEKEKK).

The thermoplastic resin may be, for example, those having two peaks of the melting point such as PA9T. The thermoplastic resin having two peaks of the melting point is completely dissolved when it reaches a temperature that is equal to or higher than the peak of the melting point at a side of the high temperature.

In terms of improvement of the strength in a lamination direction of the three-dimensional object and the precision of forming, the thermoplastic resin is preferably polypropylene (PP).

The polypropylene is not particularly limited and may be appropriately selected depending on the intended purpose. Examples thereof include random polypropylene, homopolypropylene, and block polypropylene. Among them, block polypropylene is preferable.

As the polypropylene, a commercially available product may be used. Examples of the block polypropylene include SUMITOMO NOBLEN AW564 (available from SUMITOMO CHEMICAL COMPANY, LIMITED). Examples of the homopolypropylene include VS700R (available from SunAllomer Ltd.). Examples of the random polypropylene include J226T (available from Prime Polymer Co., Ltd.).

A shape of the thermoplastic resin particles is not particularly limited and may be appropriately selected depending on the intended purpose. Examples thereof include cylindrical shapes, polygonal prism shapes, and spherical shapes. Among them, cylindrical shapes are preferable.

The cylindrical shape is not particularly limited and may be appropriately selected depending on the intended purpose. Examples thereof include perfect cylindrical shapes and elliptic cylindrical shapes. Among them, perfect cylindrical shapes are preferable.

Note that, the cylindrical shapes include substantially cylindrical shapes. Here, the "being substantially cylindrical" means that a ratio of a major axis to a minor axis (major axis/minor axis) is 1 or more but 10 or less. A circular portion of the cylindrical shape may be partially chipped.

Similarly to the cylindrical shape, the polygonal prism shape is not particularly limited and may be appropriately selected depending on the intended purpose. A polygonal portion of the polygonal prism shape may be partially chipped.

Similarly to the cylindrical shape, the spherical shape is not particularly limited and may be appropriately selected depending on the intended purpose. A portion of the spherical shape may be partially chipped.

A diameter of the circular portion of the cylindrical shape is not particularly limited and may be appropriately selected depending on the intended purpose. The diameter thereof is preferably 5 $\mu$m or more but 200 $\mu$m or less. Note that, when the circular portion of the cylindrical shape is elliptic, the diameter means the major axis.

The length of one side of the polygonal portion of the polygonal prism shape is not particularly limited and may be appropriately selected depending on the intended purpose. A diameter of a minimum circle that completely encloses the polygonal portion (smallest enclosing circle) is preferably 5 $\mu$m or more but 200 $\mu$m or less.

A diameter of the spherical shape is not particularly limited and may be appropriately selected depending on the intended purpose. The diameter thereof is 5 $\mu$m or more but 200 $\mu$m or less.

The height of the cylindrical shape: i.e. a distance between two circular portions that are faced (distance between the upper surface and the bottom surface) is not particularly limited and may be appropriately selected depending on the intended purpose. However, the height thereof is preferably 1 $\mu$m or more but 200 $\mu$m or less.

The height of the polygonal prism shape: i.e. a distance between two polygonal portions that are faced (distance between the upper surface and the bottom surface) is not particularly limited and may be appropriately selected depending on the intended purpose, similarly to the height of the cylindrical shape. However, the height thereof is preferably 1 $\mu$m or more but 200 $\mu$m or less.

Areas of the two circular portions that are faced (upper surface and bottom surface) in the cylindrical shape may be different from each other. Note that, a ratio (r2/r1) of a diameter r2 of a circular portion having a larger area to a diameter r1 of a circular portion having a smaller area is preferably 1.5 or less, more preferably 1.1 or less, because no difference between the areas of the two circular portions can increase the bulk density.

The areas of the two polygonal portions that are faced (upper surface and bottom surface) in the polygonal prism shape may be different from each other. Note that, a ratio (S2/S1) of an area (S2) having a larger polygonal portion to an area (S1) having a smaller polygonal portion is preferably approximately 1, because no difference between the areas of the two polygonal portions can increase the bulk density.

When a three-dimensional object is formed in the powder bed fusion combining system, an increase in the bulk density of the thermoplastic resin particles can improve precision of an object or a molded product.

The thermoplastic resin particles having a cylinder shape such as a cylindrical shape or a polygonal prism shape preferably has no vertex in order to increase the bulk density. Note that, the vertex means a corner portion existing in the cylinder shape.

[Production method of thermoplastic resin particles]

A production method of the thermoplastic resin particles is not particularly limited and may be appropriately selected depending on the intended purpose. However, the production method thereof is preferably a method by pulverizing or cutting a resin composition so as to have a predetermined particle diameter.

Examples of the method for pulverizing the resin composition so as to have a predetermined particle diameter include a method as described below. Specifically, a resin composition, which has a pellet shape and includes the thermoplastic resin, is pulverized with a pulverizing device. Then, the thermoplastic resin particles that do not have a predetermined particle diameter are classified or filtrated with a filter. Moreover, when the resin composition is pulverized by using its brittleness, an environmental temperature during pulverization may be equal to or less than a brittleness temperature of the resin composition, preferably equal to or less than room temperature, more preferably 0°C or less, still more preferably -25°C or less, particularly preferably -100°C or less. In the classification operation, for example, collection of the resin particles of 25 $\mu$m or more but 80 $\mu$m or less is preferable in order to improve fluidity of the resin particles.

Examples of the method for cutting the resin composition so as to have a predetermined particle diameter include a method for cutting a fiberizing resin composition obtained through extrusion molding so as to have a predetermined particle diameter.

-Control of crystallinity-

By controlling a crystal size and crystalline orientation of the crystal resin in the thermoplastic resin particles, when a three-dimensional object is formed by, for example, the PBF system, it is possible to reduce occurrence of error due to a recoating treatment that forms a film of the powder layer in the formation process under a high temperature environment.

Examples of the method for controlling the crystal size and the crystalline orientation include: methods utilizing external stimuli such as a heat treatment, a drawing treatment, an ultrasonic treatment, and an external electric field application treatment; methods using a nucleating agent; and methods for increasing crystallinity by dissolving a resin in a solvent and then slowly evaporating the solvent.

Examples of the heat treatment include an annealing treatment that heats the resin composition to a temperature that is equal to or higher than a glass transition temperature in order to increase crystallinity.

Examples of the annealing treatment include a treatment as described below. Specifically, the resin composition to which the nucleating agent is added is kept warm for three days at a temperature that is higher than the glass transition temperature by 50°C and is slowly cooled to room temperature. Moreover, before or after pulverization of the resin composition, the annealing treatment as the heat treatment may be performed.

The drawing treatment is performed in order to increase orientation of the resin through drawing of the resin and to increase crystallinity. The drawn resin is subjected to a processing such as pulverization or shearing to thereby become resin particles.

Examples of the drawing treatment include a treatment as described below. Specifically, an extrusion cooker is used to melt and stir the resin at a temperature that is higher than the melting point by 30°C or more and the melted product is drawn 1 fold or more but 10 folds or less to thereby form a fiberizing resin.

A maximum drawing ratio in the drawing treatment is appropriately set depending on a melt viscosity of the resin. When the extrusion cooker is used, the number of nozzle ports is not particularly limited, but a larger number of the nozzle ports increases productivity.

The higher the drawing ratio is, the more the crystalline orientation improves. Therefore, the drawing ratio is preferably 2.0 folds or more. The drawing ratio is more preferably 2.5 folds or more because an ideal crystalline orientation can be obtained. After the drawing treatment, an annealing step or a relax step may be performed so that deformation of the fibers upon heating would not occur.

Moreover, when the drawing treatment is performed, a shape of the thermoplastic resin particles depends on a shape of the nozzle port of the extrusion cooker. For example, in order to obtain the thermoplastic resin particles having a cylindrical shape, a shape of the nozzle port may be a circular shape. In order to obtain the thermoplastic resin particles having a polygonal prism shape, a shape of the nozzle port may be a polygonal shape.

Examples of the ultrasonic treatment include a treatment as described below. Specifically, an amount of a glycerin (reagent grade, available from Tokyo Chemical Industry Co., Ltd.) solvent about five times the amount of a powder for forming a three-dimensional object is added thereto. The resultant is heated to a temperature that is higher than the melting point of the resin by 20°C and is subjected to ultrasonic waves of 24 kHz and amplitude of 60% using an ultrasonic generator such as ultrasonicator UP200S (available from hielscher) for two hours. In this case, after the treatment of application of ultrasonic waves, the powder for forming a three-dimensional object is preferably washed with a solvent of isopropanol at room temperature, followed by vacuum drying.

Examples of the external electric field application treatment include a treatment as described below. Specifically, after the powder for forming a three-dimensional object is heated at a temperature that is equal to or higher than the glass transition temperature, an alternating electric field (500Hz) of 600 V/cm is applied thereto for 1 hour and is slowly cooled.

A temperature width (temperature window) of a change in a crystalline layer: i.e., a difference between a melting start temperature upon heating and a recrystallization temperature upon cooling is more than 3°C in terms of prevention of a warp of the object. The temperature width thereof is more preferably 5°C or more because the object with high precision can be formed. When the three-dimensional object is formed with laser in the PBF system, selection of a resin or other components having a decomposition temperature higher than the heating temperature caused by laser can prevent emitting smoke caused by irradiation of laser.

<Filling material>

The filling material means a component filled in the powder for forming a three-dimensional object and includes silicon dioxide ($SiO_2$) as one of main components.

The filling material is not particularly limited and may be appropriately selected depending on the intended purpose, so long as it includes silicon dioxide as one of main components. Examples thereof include talc, mica, clay, montmorillonite, bentonite, and zonolite. These may be used alone or in combination. Among them, as the filling material, talc is particularly preferable. When the filling material is talc, the strength in a lamination direction of the three-dimensional object and the precision of forming can be particularly improved.

-Talc-

As the filling material, talc, which is a material that can be particularly preferably used, will be described.

Talc is a layered mineral that may be called talcum, French chalk, steatite, soapstone, and the like. A compositional formula thereof is represented by, for example, $Mg_3Si_4O_{10}(OH)_2$. Talc has a different ratio of the aforementioned chemical composition depending on a place (production district) at which talc is mined.

As talc that can be used as the filling material in the present disclosure, a commercially available product can be selected, and can be appropriately selected by referring to, for example, values in catalogues disclosed by manufacturers. In addition, talc that can be used as the filling material in the present disclosure may be selected by analyzing chemical components of talc using "Methods for chemical analysis of talcs" of JCRS 106-2000, which is one of standards of The Ceramic Society of Japan.

Regarding talc, a volume average particle diameter and an ignition loss, which will be described hereinafter, can be confirmed by referring to, for example, values in catalogues disclosed by manufacturers.

Examples of the commercially available product of talc that can be used as the filling material in the present disclosure include Talcan Pawder PK-S, Talcan Pawder PK-C, GHL10, GHL7, and GH7 (available from HAYASHI KASEI CO., LTD.). Note that, "Talcan Pawder" is a registered trademark of HAYASHI KASEI CO., LTD.

Regarding the filling material of the present disclosure, a ratio of mass of silicon dioxide to total mass of the main components in the filling material is 0.630 or more, more preferably 0.640 or more. When the ratio of mass of silicon dioxide to total mass of the main components in the filling material is 0.630 or more, it is possible to improve the strength in a lamination direction of the three-dimensional object and the precision of forming as described above. When the ratio of mass of silicon dioxide to total mass of the main components in the filling material is less than 0.630, compatibility with the thermoplastic resin particles is deteriorated, which may decrease strength of the three-dimensional object in some cases.

The ratio of mass of silicon dioxide to total mass of the main components in the filling material is preferably 0.630 or more but 0.660 or less (0.66 or less). When the ratio of mass of silicon dioxide to total mass of the main components in the filling material falls within this range, it is possible to improve the strength in a lamination direction of the three-dimensional object and the precision of forming.

The main components in the filling material mean components of metallic oxides in the filling material.

When the filling material is talc, the main components in the filling material include silicon dioxide ($SiO_2$), magnesium oxide (MgO), aluminum oxide ($Al_2O_3$), iron oxide ($Fe_2O_3$), and calcium oxide (CaO).

A volume average particle diameter of the filling material is not particularly limited and may be appropriately selected depending on the intended purpose. The volume average particle diameter thereof is preferably 100 $\mu$m or less, more preferably 20 $\mu$m or less, still more preferably 13 $\mu$m or less, particularly preferably 6 $\mu$m or less. When the volume average particle diameter of the filling material is 6 $\mu$m or less, it is possible to particularly improve the strength in a lamination direction of the three-dimensional object. Moreover, a volume average particle diameter of the filling material is preferably 5 $\mu$m or more but 6 $\mu$m or less.

An effect achieved when a particle diameter of the filling material falls within the particularly preferable range is particularly remarkably found when one having a flat-plate shape such as talc is used as the filling material in the case where a three-dimensional object is formed using the 3D printer such as the PBF system. The reason for this is as follows. Specifically, it is believed that less fluidity of the melted resin, which is the melted thermoplastic resin particles, in the vertical direction in the laminated formation layers results in easy arrangement of the filling material in the horizontal direction under the aforementioned conditions, and it is difficult to strengthen adhesive strength between the formation layers in the filling material having a larger volume average particle diameter.

The volume average particle diameter of the filling material can be measured using, for example, a particle size distribution measurement device (available from MicrotracBEL Corp., microtrac MT3300EXII).

An ignition loss (Ig. Loss value) of the filling material is not particularly limited and may be appropriately selected depending on the intended purpose.

The ignition loss means mass of volatile substances (mainly, for example, organic matters) contained in minerals such as talc. Note that, in the present specification, the volatile substances in the filling material may be referred to as "accessary component".

The ignition loss represents a change in mass when the filling material is heated at 1,000°C for 2 hours using a muffle furnace and can be calculated by the following mathematical formula.

$$\text{Ig. Loss value } (\%) = (a-b)/a \times 100$$

In the mathematical formula, a represents mass of the filling material before heating and b represents mass of the filling material after heating.

The ignition lass of the filling material is preferably 8% or less, more preferably 7% or less, particularly preferably 6.85% or less. That is, the ignition loss obtained when the filling material is heated at 1,000°C for 2 hours is particularly preferably 6.85% or less. Moreover, the ignition loss of the filling material is preferably 5.25% or more but 6.85% or less.

When the ignition loss of the filling material falls within the particularly preferable numerical value range, the three-dimensional object can be particularly improved in the strength in a lamination direction of the three-dimensional object. The reason for this is as follows. When the ignition loss of the filling material is small, an amount of impurities such as organic components contained in the filling material is small. Therefore, it is believed that when the powder for forming a three-dimensional object is melted to form a formation layer, precipitation of the impurities contained in the filling material is prevented, which strengthens adhesive strength between formation layers.

A rate of the filling material in the powder for forming a three-dimensional object is not particularly limited and may be appropriately selected depending on the intended purpose. However, the rate thereof is preferably 0.1% by mass or more but 50% by mass or less, more preferably 5% by mass or more but 20% by mass or less. When the rate of the filling material in the powder for forming a three-dimensional object falls within the preferable numerical value range, the strength in a lamination direction of the three-dimensional object and the precision of forming can be further improved.

A state of the filling material in the powder for forming a three-dimensional object is not particularly limited and may be appropriately selected depending on the intended purpose. Examples of the state of the filling material in the powder for forming a three-dimensional object include: a state where the filling material is included in the thermoplastic resin particles (a state where filling-material-containing resin particles are formed and the powder for forming a three-dimensional object is formed of the filling-material-containing resin particles); a state where the filling-material-containing resin particles and particles of the filling material are mixed; a state where the thermoplastic resin particles and particles of the filling material are mixed; and a state where the filling-material-containing resin particles, the thermoplastic resin particles, and particles of the filling material are mixed.

Among them, the state where the filling material is included in the thermoplastic resin particles (the state where the powder for forming a three-dimensional object is formed of the filling-material-containing resin particles) is preferable in order to increase dispersibility of the filling material in the powder for forming a three-dimensional object. That is, the thermoplastic resin particles preferably include the filling material.

<Other components>

Examples of the other components in the powder for forming a three-dimensional object include: additives such as other filling materials, deterioration inhibitors, fluidizers, flame retardants, plasticizers, and nucleating agents; and amorphous resins. These may be used alone or in combination. Each of the other components may be used by mixing it with the thermoplastic resin particles, or may be used by coating it on the surface of the thermoplastic resin particles.

<<Other filling materials>>

The other filling materials are not particularly limited and may be appropriately selected depending on the intended purpose. Examples thereof include inorganic fiber fillers, bead fillers, glass fillers described in WO2008/057844, glass beads, carbon fibers, and aluminum balls in terms of improvement of strength of the three-dimensional object. These may be used alone or in combination.

The inorganic fiber filler is not particularly limited and may be appropriately selected depending on the intended purpose. Examples thereof include carbon fibers, inorganic glass fibers, and metal fibers.

The bead filler is not particularly limited and may be appropriately selected depending on the intended purpose. Examples thereof include carbon beads, inorganic glass beads, and metal beads.

An average fiber diameter of the inorganic fiber filler is not particularly limited and may be appropriately selected depending on the intended purpose, but is preferably 1 $\mu$m or more but 30 $\mu$m or less.

An average fiber length of the inorganic fiber filler is not particularly limited and may be appropriately selected depending on the intended purpose, but is preferably 30 $\mu$m or more but 500 $\mu$m or less.

When the average fiber diameter and the average fiber length of the inorganic fiber filler fall within the preferable ranges, strength of the object is improved, and surface roughness of the object including this fiber filler can be substantially the same as surface roughness of the object including no fiber filler, which is advantageous.

An amount of the inorganic fiber filler is preferably 5% by mass or more but 60% by mass or less relative to the total amount of the powder for forming a three-dimensional object. When the amount of the inorganic fiber filler is 5% by mass or more, strength of the object is improved. When the amount of the inorganic fiber filler is 60% by mass or less, the formation ability is improved.

The circularity of the bead filler is not particularly limited and may be appropriately selected depending on the intended purpose, but is preferably 0.8 or more but 1.0 or less.

The circularity is determined by the following formula: circularity=$4\pi S/L^2$, where S is an area (the pixel number of the bead filler obtained when the bead filler is imaged) and L is circumference.

A volume average particle diameter of the bead filler is not particularly limited and may be appropriately selected depending on the intended purpose, but is preferably 10 $\mu$m or more but 200 $\mu$m or less.

The volume average particle diameter can be measured using, for example, a particle size distribution measurement device (available from MicrotracBEL Corp., microtrac MT3300EXII).

An amount of the bead filler is preferably 5% by mass or more but 60% by mass or less relative to the total amount of the powder for forming a three-dimensional object. When the amount thereof is 5% by mass or more, strength of the object is improved. When the amount thereof is 60% by mass or less, the formation ability is improved.

<<Deterioration inhibitor>>

The powder for forming a three-dimensional object may include a deterioration inhibitor in order to maintain thermal stability of the molecules and to inhibit deterioration of the resin such as crosslinking or decomposition.

Examples of the deterioration inhibitor include metal chelating agents, ultraviolet absorbers, polymerization inhibitors, and antioxidants.

Examples of the metal chelating agent include hydrazide-based compounds, phosphate-based compounds, and phosphite-based compounds.

Examples of the ultraviolet absorber include triazine-based compounds.

Examples of the polymerization inhibitor include copper acetate.

Examples of the antioxidant include hindered phenol-based compounds, phosphorus-based compounds, and sulfur-based compounds.

Examples of the hindered phenol-based antioxidant include various additives such as radical scavengers.

Examples of the phosphorus-based antioxidant include: phosphorous acid, phosphoric acid, phosphonous acid, and phosphonic acid; esters of phosphite compounds, phosphate compounds, phosphonite compounds, and phosphonate compounds; and tertiary phosphines. These may be used alone or in combination.

When two or more deterioration inhibitors are used in combination, there is also combination that can achieve more significant effects. When the hindered phenol antioxidant and the phosphorus-based antioxidant are used in combination as the deterioration inhibitor, an effect of complementarily improving stability can be achieved. Therefore, an effect of further improving the long-term stability can be achieved.

An amount of the deterioration inhibitor is preferably 0.01% by mass or more but 10% by mass or less, more preferably 0.05% by mass or more but 5% by mass or less, still more preferably 0.1% by mass or more but 5% by mass or less, relative to the total amount of the powder for forming a three-dimensional object, in order to prevent deterioration for a long period of time. A preferable range of an amount of each deterioration inhibitor in the case where the two or more deterioration inhibitors are used in combination is the same as the above range. When the amount of the deterioration inhibitor falls within the preferable range, an effect of preventing thermal deterioration of the resin can be sufficiently achieved, and physical properties of the object, which is obtained by recycling a powder for forming a three-dimensional object that has been used for formation, is improved, which makes it possible to achieve an effect of preventing the powder for forming a three-dimensional object from being discolored due to heat.

<<Fluidizer>>

The fluidizer is not particularly limited and may be appropriately selected depending on the intended purpose. Examples thereof include spherical particles formed of an inorganic material.

A volume average particle diameter of the spherical particles formed of an inorganic material is not particularly limited and may be appropriately selected depending on the intended purpose, but is preferably less than 10 $\mu$m.

An amount of the fluidizer is not particularly limited and may be appropriately selected depending on the intended purpose, so long as the amount thereof is an enough amount to cover the surface of the particle. The amount thereof is preferably 0.1% by mass or more but 10% by mass or less relative to the total amount of the powder for forming a three-dimensional object.

Examples of the inorganic material in the spherical particle include silica, alumina, titania, zinc oxide, magnesium oxide, tin oxide, iron oxide, copper oxide, hydrated silica, silica surface of which is modified with a silane coupling agent, and magnesium silicate. Among them, silica, titania, hydrated silica, and silica surface of which is modified with a silane coupling agent are preferable in terms of an effect of improving fluidity. Silica, which has a surface modified with a silane coupling agent so as to have hydrophobicity, is more preferable in terms of cost.

<<Flame retardant>>

Examples of the flame retardant include various flame retardants such as halogen-based flame retardants, phosphorus-based flame retardants, inorganic-hydrated-metal-compound-based flame retardants, nitrogen-based flame retardants, and silicone-based flame retardants. Various flame retardants for buildings, vehicles, and ship rigging may be used in the powder for forming a three-dimensional object. When two or more flame retardants are used in combination, combination of the halogen-based flame retardant and the inorganic-hydrated-metal-compound-based flame retardant improves flame resistance.

Moreover, the powder for forming a three-dimensional object may include: a fibrous substance (e.g., glass fibers, carbon fibers, and aramid fibers); or an inorganic reinforcing agent such as an inorganic laminated silicate (e.g., talc, mica, and montmorillonite). Such an embodiment can strengthen both the physical properties and the flame resistance.

The flame resistance of the powder for forming a three-dimensional object can be evaluated through, for example, JIS K6911, JIS L1091 (ISO6925), JIS C3005, and the pyrogenicity test (cone calorimeter).

An amount of the flame retardant is preferably 1% by mass or more but 50% by mass or less relative to the total amount of the powder for forming a three-dimensional object. The amount thereof is more preferably 10% by mass or more but 30% by mass or less relative to the total amount of the powder for forming a three-dimensional object in terms of improvement of the flame resistance. When the amount of the flame retardant is 1% by mass or more, the flame resistance can be sufficiently obtained. When the amount of the flame retardant is 50% by mass or less, a change in the melt-solidification characteristics of the powder for forming a three-dimensional object is prevented, which can prevent decreased precision of forming and deteriorated physical properties of the object.

<Characteristics of powder for forming three-dimensional object>

The specific gravity of the powder for forming a three-dimensional object is preferably 0.8 g/mL or more. When the specific gravity of the powder for forming a three-dimensional object is 0.8 g/mL or more, secondary aggregation of the particles can be prevented in the recoating treatment that forms a film of the powder layer upon formation. Meanwhile, in applications such as the alternative to metals, the specific gravity of the powder for forming a three-dimensional object is preferably 3.0 g/mL or less in terms of a demand for weight reduction.

The specific gravity of the powder for forming a three-dimensional object can be obtained by measuring true specific gravity. The true specific gravity can be obtained as described below. Specifically, a dry-type automatic density meter (AccuPyc 1330, available from SHIMADZU CORPORATION) using the gas displacement method is used to change volume and pressure of gas (He gas) at a certain temperature to thereby determine volume of a sample, measure mass of the sample, and calculate density of the sample.

A volume average particle diameter (Mv) of the powder for forming a three-dimensional object is not particularly limited and may be appropriately selected depending on the intended purpose. The volume average particle diameter (Mv) thereof is preferably 5 $\mu$m or more but 200 $\mu$m or less, more preferably 10 $\mu$m or more but 100 $\mu$m or less, particularly preferably 75 $\mu$m or more but 80 $\mu$m or less. A ratio (Mv/Mn), which is obtained by dividing the volume average particle diameter (Mv) of the powder for forming a three-dimensional object by the number average particle diameter (Mn), is preferably 2.00 or less, more preferably 1.50 or less, still more preferably 1.20 or less, in terms of improvement of the precision of forming. Note that, the 50% volume particle diameter and the Mv/Mn can be measured using, for example, a particle size distribution measurement device (available from MicrotracBEL Corp., microtrac MT3300EXII).

The powder for forming a three-dimensional object is preferably dried to such an extent that the formation is not adversely affected. Therefore, the resin particles dried using a vacuum drier or silica gel are used for the formation.

<Production method of powder for forming three-dimensional object>

A method for producing the powder for forming a three-dimensional object is not particularly limited and may be appropriately selected depending on the intended purpose. It is possible to obtain the powder for forming a three-dimensional object by, for example, processing the thermoplastic resin particles and the filling material through the known method.

As the method for producing the powder for forming a three-dimensional object, when the powder for forming a three-dimensional object is formed with filling-material-containing resin particles, pellets or powders of the thermoplastic resin and powders formed of particles of the filling material (filling material powders) are sufficiently mixed using a mixing device such as mixer or a shaker. After the mixed product obtained is melted and kneaded at a temperature higher than the melting point of the thermoplastic resin using, for example, a kneading extrusion apparatus, the resultant is subjected to pelletizing to thereby prepare pellets of the filling-material-containing resin. Then, the pellets prepared can be formed into particles to thereby obtain the powder for forming a three-dimensional object formed of the filling-material-containing resin particles.

A method for forming the pellets into particles is not particularly limited and may be appropriately selected depending on the intended purpose. Examples thereof include: a pulverizing method at normal temperature or under a freezing temperature environment; an atomize method by melting the resin, followed by ejection; a suspension method; a melt-kneading·solution mixing method; and a method by forming the resin into fibers or a sheet and then cutting the resultant in the form of particles. Moreover, the obtained powder for forming a three-dimensional object can be classified in order to obtain a particle size or particle size distribution suitable for the intended purpose.

As the method for producing the powder for forming a three-dimensional object, when the powder for forming a three-dimensional object is formed in a state where the thermoplastic resin particles and particles of the filling material are mixed, pellets or powders of the thermoplastic resin are formed into particles through the aforementioned method. Then, the thermoplastic resin particles and the filling material powders obtained are sufficiently mixed using a mixing device such as mixer or a shaker. As a result, it is possible to obtain the powder for forming a three-dimensional object in the state where the thermoplastic resin particles and particles of the filling material are mixed.

<Application>

The powder of the present disclosure for forming a three-dimensional object has an appropriate balance with respect to parameters such as the particle size, the particle size distribution, the heat transfer characteristics, the melt viscosity, the bulk density, the fluidity, the melting temperature, and the recrystallization temperature, and can be suitably used in various steric forming methods using the powder for forming a three-dimensional object such as the SLS system, the SMS (Selective Mask Sintering) system, the MJF (Multi Jet Fusion) system, and the BJ (Binder Jetting) method.

(Powder)

A powder of the present disclosure has the same characteristics as those of the powder of the present disclosure for forming a three-dimensional object. In other words, the thermoplastic resin particles, the filling material, the other components, the characteristics of the powder for forming a three-dimensional object, and the method for producing the powder for forming a three-dimensional object in the aforementioned powder of the present disclosure for forming a three-dimensional object can be also applied to the powder of the present disclosure.

More specifically, the powder of the present disclosure includes at least thermoplastic resin particles and a filling material including silicon dioxide as one of main components. In addition, a ratio of mass of silicon dioxide to total mass of the main components in the filling material contained in the powder of the present disclosure is 0.630 or more, preferably 0.630 or more but 0.660 or less (0.66 or less).

In the powder of the present disclosure, the main components in the filling material preferably include silicon dioxide, magnesium oxide, aluminum oxide, iron oxide, and calcium oxide. Moreover, in the powder of the present disclosure, the filling material is preferably talc.

Furthermore, in the powder of the present disclosure, a volume average particle diameter of the filling material is preferably 6 $\mu$m or less. In the powder of the present disclosure, an ignition loss obtained when the filling material is heated at 1,000°C for 2 hours is preferably 6.85% or less.

The powder of the present disclosure can be suitably used in, for example, surface modification agents, spacers, lubricants, coating materials, whetstones, additives, separators for secondary batteries, food, cosmetics, and clothes. In addition to the above applications, the powder of the present disclosure may be used as alternative materials to metals or materials used in the fields of automobiles, precision instruments, semiconductors, aerospace, and medical care.

(Forming device)

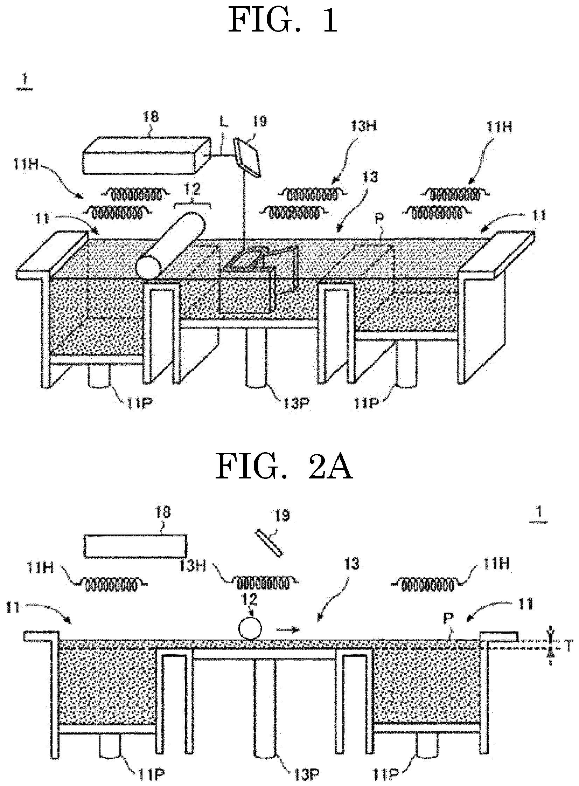

A forming device for forming a three-dimensional object using a powder for forming a three-dimensional object will be described with reference to FIG. 1. FIG. 1 is a schematic diagram presenting a forming device according to one embodiment of the present disclosure.

As presented in FIG. 1, a forming device 1 includes: a storage tank 11 as one example of a storing unit configured to store a powder for forming a three-dimensional object P for formation; a roller 12 as a supply unit configured to supply the powder for forming a three-dimensional object P stored in the storage tank 11; a laser scanning space 13 that is configured to be provided with the powder for forming a three-dimensional object P supplied by the roller 12 and to be scanned by a laser L; an electromagnetic irradiation source 18 that is an irradiation source of the laser L as electromagnetic radiations; and a reflector 19 configured to reflect the laser L emitted by the electromagnetic irradiation source 18 to a predetermined position of the laser scanning space 13. In addition, the forming device 1 includes heaters 11H and 13H configured to heat the storage tank 11 and the powder for forming a three-dimensional object P stored in the laser scanning space 13, respectively.

The electromagnetic irradiation source 18 is not particularly limited. Examples thereof include $CO_2$ lasers, infrared ray irradiation sources, microwave generators, radiant heaters, LED lamps, and combination thereof. A reflective surface of the reflector 19 moves based on two-dimensional data of a three-dimensional (3D) model while the electromagnetic source 18 emits the laser L. The two-dimensional data of the 3D model gives each cross-sectional shape when the 3D model is sliced at a certain interval. As a result, the laser L is selectively emitted to the area indicated by the two-dimensional data within the laser scanning space 13 by changing the reflection angle of the laser L. The powder for forming a three-dimensional object at a position where the laser L is emitted is melted and sintered to form a layer. That is, the electromagnetic source 18 functions as a layer forming unit configured to form each layer of a formed product from the powder for forming a three-dimensional object P and a curing unit configured to cure the layer.

Moreover, in the forming device 1, pistons 11P and 13P are disposed in the storage tank 11 and laser scanning space 13, respectively. When the formation of the layer is completed, the pistons 11P and 13P move in a manner that the storage tank 11 and the laser scanning space 13 are moved upward or downward relative to the lamination direction of the formed product. As a result, the fresh powder for forming a three-dimensional object P to be used for formation of a new layer can be supplied from the storage tank 11 to the laser scanning space 13.

The forming device 1 selectively melts the powder for forming a three-dimensional object P by changing an irradiation position of laser by the reflector 19, but the present disclosure is not limited to such an embodiment. The powder of the present disclosure for forming a three-dimensional object is also suitably used for a forming device of a selective mask sintering (SMS) method. In the SMS method, for example, part of the powder for forming a three-dimensional object is masked with a shielding mask and electromagnetic waves such as infrared rays are irradiated to the area not covered with the mask to thereby selectively melt the powder for forming a three-dimensional object. As a result, a three-dimensional object is performed. When the SMS process is used, the powder for forming a three-dimensional object P preferably includes one or more heat absorbent that reinforces infrared absorption characteristics or dark substance to increase infrared absorbing properties. Examples of the heat absorbent and dark substance include carbon fibers, carbon black, carbon nanotubes, and cellulose nanofibers. As the SMS process, for example, the method disclosed in US Patent No. 6,531,086 can be suitably used.

(Forming method of three-dimensional object)

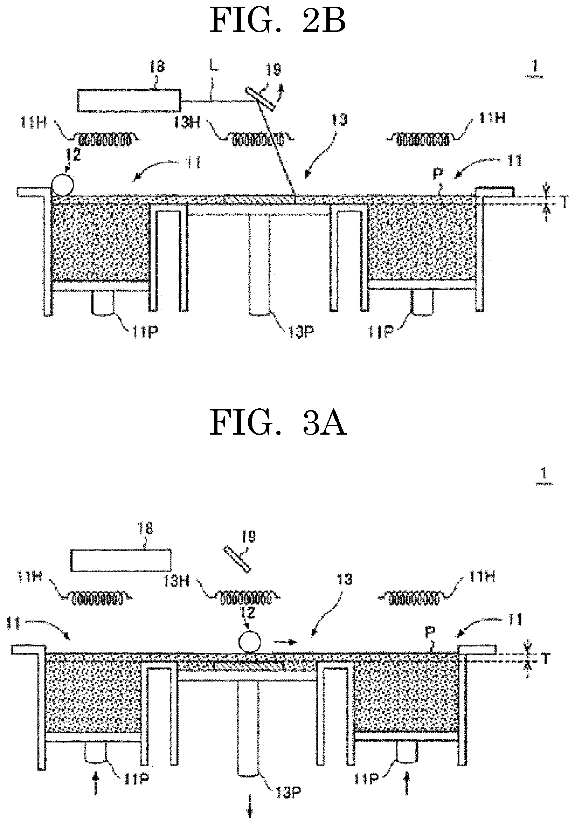

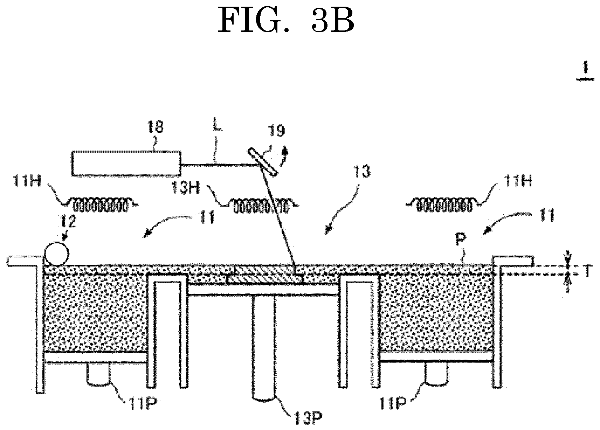

FIG. 2A, FIG. 2B, FIG. 3A, and FIG. 3B are schematic diagrams presenting a forming method of a three-dimensional object. The forming method of the three-dimensional object using the forming device 1 will be described with reference to FIG. 2A, FIG. 2B, FIG. 3A, and FIG. 3B.

The powder for forming a three-dimensional object P stored in the storage tank 11 is heated by the heater 11H. A temperature of the storage tank 11 is preferably as high as possible but is equal to or lower than a melting point of the powder for forming a three-dimensional object P in view of inhibition of a warp at the time of melting the powder for forming a three-dimensional object P by laser irradiation. In view of prevention of melting of the powder for forming a three-dimensional object P in the storage tank 11, the temperature of the storage tank 11 is preferably lower than the melting point of the powder for forming a three-dimensional object P by 10°C or more. As presented in FIG. 2A, an engine of the forming device 1 drives the roller 12 to supply and level the powder for forming a three-dimensional object P of the storage tank 11 to the laser scanning space 13 to form a powder layer having a thickness T of one layer, as one example of the supplying step. The powder for forming a three-dimensional object P supplied to the laser scanning space 13 is heated by the heater 13H. The temperature of the laser scanning space 13 is preferably as high as possible in view of inhibition of a warp at the time of melting the powder for forming a three-dimensional object P by laser irradiation. In view of prevention of melting of the powder for forming a three-dimensional object P in the laser scanning space 13, the temperature of the laser scanning space 13 is preferably lower than the melting point of the powder for forming a three-dimensional object P by 5°C or more.

The engine of the forming device 1 receives a plurality of inputs of two-dimensional data generated from a 3D model. As presented in FIG. 2B, the engine of the forming device 1 emits laser from the electromagnetic source 18 with moving a reflection surface of the reflector 19 based on the two-dimensional data at the bottommost surface side among a plurality of the two-dimensional data. The output of laser is not particularly limited and may be appropriately selected depending on the intended purpose. The output is preferably 10 W or more but 150 W or less. As a result of the laser irradiation, the powder for forming a three-dimensional object P at a position corresponding to the pixels designated by the two-dimensional data at the bottommost surface side is melted within the powder layer. Once the laser irradiation is completed, the melted resin is cured, and a sintered layer in the shape designated by the two-dimensional data at the bottommost surface side is formed (one example of the layer forming step).

A thickness T of the sintered layer is not particularly limited. An average value of the thickness T is preferably 10 $\mu$m or more, more preferably 50 $\mu$m or more, even more preferably 100 $\mu$m or more. Moreover, the thickness T of the sintered layer is not particularly limited, but the average value of the thickness T is preferably less than 200 $\mu$m, more preferably less than 150 $\mu$m, even more preferably less than 120 $\mu$m.

As presented in FIG. 3A, once the sintered layer at the bottommost surface side is formed, the engine of the forming device 1 lowers the laser scanning space 13 by the thickness T of one layer with the piston 13P to form a forming space of the thickness T of one layer in the laser scanning space 13. Moreover, the engine of the forming device 1 lifts the piston 11P to be able to supply fresh powder for forming a three-dimensional object P. Subsequently, the engine of the forming device 1 drives the roller 12 to supply and level the powder for forming a three-dimensional object P of the storage tank 11 in the laser scanning space 13 to form a powder layer having the thickness T of one layer, as presented in FIG. 3A.

As presented in FIG. 3B, the engine of the forming device 1 emits laser from the electromagnetic source 18 with moving the reflective surface of the reflector 19 based on the two-dimensional data of the second layer from the bottommost surface side among the plurality of two-dimensional data. As a result, the powder for forming a three-dimensional object P at a position corresponding to the pixels designated by the two-dimensional data at the second layer from the bottommost surface side is melted within the powder layer. Once the laser irradiation is completed, the melted resin is cured, and a sintered layer in the shape designated by the two-dimensional data of the second layer from the bottommost surface side is formed in the state where the sintered layer is laminated on the sintered layer at the bottommost surface side.

The forming device 1 repeats the supplying step and the layer forming step to laminate sintered layers. When the formation is completed based on all of the plurality of two-dimensional data, a three-dimensional object having the same shape as the shape of the 3D model can be obtained.

<Three-dimensional object>

The three-dimensional object formed by the powder for forming a three-dimensional object is not particularly limited and may be appropriately selected depending on the intended purpose. Examples thereof include prototypes of components of electronic devices and components of automobiles, trial products for strength tests, and small-lot products used for dress-up tools in aerospace and automobile fields. It is expected that the PBF system can give more excellent strength than other steps such as the FFF (Fused Filament Fabrication) system or the inkjet system. Therefore, such a product that can be formed through the PFB system has enough toughness to be used as a practical product.

Regarding production speed, it is possible to achieve a required quantity of products by, for example, producing a large amount of small components in a planar manner. The forming method of the three-dimensional object in the PBF system used in the present disclosure does not require a die used in the injection molding. Therefore, it is possible to achieve overwhelming cost reduction and shortened delivery time in the production of trials and prototypes.

Examples

Hereinafter, the present disclosure will be described in more detail by way of Examples and Comparative Examples. However, the present disclosure should not be construed as being limited to these Examples.

(Example 1)

Block polypropylene (Block PP) resin (product name: SUMITOMO NOBLEN AW564, available from SUMITOMO CHEMICAL COMPANY, LIMITED) (90 parts by mass) as a thermoplastic resin and talc 1 (product name: Talcan Pawder PK-S, available from HAYASHI KASEI CO., LTD.) (10 parts by mass) as a filling material were melted and kneaded at a temperature higher than the melting point of the block polypropylene by 30°C using a kneading-extrusion micropellet production device (device name: 1AEC, available from IMOTO MACHINERY CO., LTD.). Then, the resultant was subjected to pelletizing to thereby prepare a talc-containing resin pellet 1.

The values of physical properties of talc 1 (values in the catalogue) are presented in Table 1. Here, the "ratio of $SiO_2$ to main components" in Table 1 means a ratio of mass of silicon dioxide to total mass of the main components in talc.

In Example 1, as presented in Table 1, talc, which has a ratio of $SiO_2$ to main components of 0.649, a volume average particle diameter of 11.7 $\mu$m, and an ignition loss of 6.83%, was used as the talc 1. The main components in the talc 1 and talcs 2 to 8 that will be described hereinafter are silicon dioxide, magnesium oxide, aluminum oxide, iron oxide, and calcium oxide.

Next, the talc-containing resin pellet 1 was subjected to freezing and pulverization at -200°C so as to have a width of 5 $\mu$m or more but 200 $\mu$m or less using a low temperature pulverizing unit (device name: LINREX MILL LX1, available from HOSOKAWA MICRON CORPORATION). Then, the resultant was classified by removing coarse powders using a filter having an aperture of 65 $\mu$m and removing fine powders using a filter having an aperture of 36 $\mu$m to thereby obtain a powder for forming a three-dimensional object 1.

<Volume average particle diameter>

The powder for forming a three-dimensional object 1 obtained was measured for the volume average particle diameter Dv ($\mu$m) using a particle size distribution measurement device (available from MicrotracBEL Corp., microtrac MT3300EXII). At that time, a particle refractive index of each particle of the powder for forming a three-dimensional object was used and the measurement was performed through the dry (air) method without using a solvent. Measurement results are presented in Table 1. As presented in Table 1, the powder for forming a three-dimensional object 1 had a volume average particle diameter had a volume average particle diameter of 80 $\mu$m.

[Evaluation of three-dimensional object]

The powder for forming a three-dimensional object 1 was used to form a three-dimensional object, and then the strength in a lamination direction of the three-dimensional object and the precision of forming were evaluated.

Specifically, the powder for forming a three-dimensional object 1 was charged into a storage tank of the SLS style forming device (available from RICOH Company, Ltd., AM S5500P) to produce a three-dimensional object. The setting conditions for the SLS style forming device were as follows: an average thickness of a layer of 0.1 mm; a laser output of 10 watts or more but 150 watts or less; a scanning interval (pitch) of laser of 0.1 mm; a component bed temperature that is a temperature lower than the melting point by 3°C; and a forming time of 50 hours. In the SLS style forming device, five test samples (Z objects) having a longer side in the Z-axis vertical direction (vertical direction to a direction in which the roller moves) were formed at a center of the laser scanning space. Note that, an interval between the respective objects is 5 mm or more. The test sample is ISO (International Organization for Standardization) 3167 Type1A multipurpose dog bone-like test sample (the sample includes a central part having a length of 80 mm, a thickness of 4 mm, and a width of 10 mm).

<Precision of forming>

The central part having a width of 10 mm of the formed five test samples was measured for length in the width direction at five points using a digital caliper to calculate an average value of the width length (width average value). Then, a difference between the value obtained and an intended width length was considered as the precision of forming and was calculated based on the following formula.

$$\text{Precision of forming (mm)} = \text{width average value (mm)} - 10 \text{ (mm)}$$

Then, the calculated precision of forming was evaluated based on the following evaluation criteria. Results are presented in Table 1.

<<Evaluation criteria>>

A: The precision of forming is 0.1 mm or less.
B: The precision of forming is more than 0.1 mm but 0.2 mm or less.
C: The precision of forming is more than 0.2 mm.

<Strength in lamination direction>

The obtained five test samples were measured for bending strength in the lamination direction using a tension tester (device name: AGS-5kN, available from SHIMADZU CORPORATION) according to ISO 527, and an average value of the measurements was considered as strength [MPa]. The tension test speed was 10 mm/min. Results are presented in Table 1.
Then, the strength measured was evaluated based on the following evaluation criteria. Results are presented in Table 1.

<<Evaluation criteria>>

A: The measured strength is 35 MPa or more.
B: The measured strength is 27 MPa or more but less than 35 MPa.
D: The measured strength is less than 27 MPa.

(Example 2)

In Example 2, a powder for forming a three-dimensional object 2 was prepared in the same manner as in Example 1 except that talc 2 (product name: Talcan Pawder PK-C, available from HAYASHI KASEI CO., LTD.) (10 parts by mass) was used as the filling material. The values of physical properties of the talc 2 are presented in Table 1.
In Example 2, as presented in Table 1, talc, which has a ratio of $SiO_2$ to main components of 0.651, a volume average particle diameter of 12.1 $\mu$m, and an ignition loss of 5.7%, was used as the talc 2.
In addition, the powder for forming a three-dimensional object 2 was evaluated in the same manner as in Example 1. Results are presented in Table 1. As presented in Table 1, the powder for forming a three-dimensional object 2 had a volume average particle diameter of 83 $\mu$m.

(Example 3)

In Example 3, a powder for forming a three-dimensional object 3 was prepared in the same manner as in Example 1 except that talc 3 (product name: GHL10, available from HAYASHI KASEI CO., LTD.) (10 parts by mass) was used as the filling material. The values of physical properties of the talc 3 are presented in Table 1.
In Example 3, as presented in Table 1, talc, which has a ratio of $SiO_2$ to main components of 0.643, a volume average particle diameter of 8 $\mu$m, and an ignition loss of 5.3%, was used as the talc 3.
In addition, the powder for forming a three-dimensional object 3 was evaluated in the same manner as in Example 1. Results are presented in Table 1. As presented in Table 1, the powder for forming a three-dimensional object 3 had a volume average particle diameter of 76 $\mu$m.

(Example 4)

In Example 4, a powder for forming a three-dimensional object 4 was prepared in the same manner as in Example 1 except that talc 4 (product name: GHL7, available from HAYASHI KASEI CO., LTD.) (10 parts by mass) was used as the filling material. The values of physical properties of the talc 4 are presented in Table 1.
In Example 4, as presented in Table 1, talc, which has a ratio of $SiO_2$ to main components of 0.643, a volume average particle diameter of 5.8 $\mu$m, and an ignition loss of 5.3%, was used as the talc 4.
In addition, the powder for forming a three-dimensional object 4 was evaluated in the same manner as in Example 1. Results are presented in Table 1. As presented in Table 1, the powder for forming a three-dimensional object 4 had a volume average particle diameter of 85 $\mu$m.

(Example 5)

In Example 5, a powder for forming a three-dimensional object 5 was prepared in the same manner as in Example 1 except that talc 5 (product name: GH7, available from HAYASHI KASEI CO., LTD.) (10 parts by mass) was used as the filling material. The values of physical properties of the talc 5 are presented in Table 1.
In Example 5, as presented in Table 1, talc, which has a ratio of $SiO_2$ to main components of 0.642, a volume average particle diameter of 5.8 $\mu$m, and an ignition loss of 5.25%, was used as the talc 5.
In addition, the powder for forming a three-dimensional object 5 was evaluated in the same manner as in Example 1. Results are presented in Table 1. As presented in Table 1, the powder for forming a three-dimensional object 5 had a volume average particle diameter of 80 $\mu$m.

(Comparative Example 1)

In Comparative Example 1, a powder for forming a three-dimensional object 6 was prepared in the same manner as in Example 1 except that talc 6 (product name: KHP-125, available from HAYASHI KASEI CO., LTD.) (10 parts by mass) was used as the filling material. The values of physical properties of the talc 6 are presented in Table 1.
In Comparative Example 1, as presented in Table 1, talc, which has a ratio of $SiO_2$ to main components of 0.629, a volume average particle diameter of 7.5 $\mu$m, and an ignition loss of 6.87%, was used as the talc 6.
In addition, the powder for forming a three-dimensional object 6 was evaluated in the same manner as in Example 1. Results are presented in Table 1. As presented in Table 1, the powder for forming a three-dimensional object 6 had a volume average particle diameter of 80 $\mu$m.

(Comparative Example 2)

In Comparative Example 2, a powder for forming a three-dimensional object 7 was prepared in the same manner as in Example 1 except that talc 7 (product name: KHP-400, available from HAYASHI KASEI CO., LTD.) (10 parts by mass) was used as the filling material. The values of physical properties of the talc 7 are presented in Table 1.
In Comparative Example 2, as presented in Table 1, talc, which has a ratio of $SiO_2$ to main components of 0.629, a volume average particle diameter of 14.2 $\mu$m, and an ignition loss of 6.87%, was used as the talc 7.
In addition, the powder for forming a three-dimensional object 7 was evaluated in the same manner as in Example 1. Results are presented in Table 1. As presented in Table 1, the powder for forming a three-dimensional object 7 had a volume average particle diameter of 80 $\mu$m.

(Comparative Example 3)

In Comparative Example 3, a powder for forming a three-dimensional object 8 was prepared in the same manner as in Example 1 except that talc 8 (product name: Micron White #5000R, available from HAYASHI KASEI CO., LTD.) (10 parts by mass) was used as the filling material. The values of physical properties of the talc 8 are presented in Table 1.
In Comparative Example 3, as presented in Table 1, talc, which has a ratio of $SiO_2$ to main components of 0.624, a volume average particle diameter of 4.6 $\mu$m, an ignition loss of 7.01%, was used as the talc 8.
In addition, the powder for forming a three-dimensional object 8 was evaluated in the same manner as in Example 1. Results are presented in Table 1. As presented in Table 1, the powder for forming a three-dimensional object 8 had a volume average particle diameter of 80 $\mu$m.

Table 1

| | Thermoplastic resin | Filling material | | | | Powder for forming three-dimensional object | | Evaluation criteria | | | |
|---|---|---|---|---|---|---|---|---|---|---|---|
| | Compound (name) | Name | Ratio of $SiO_2$ to main components | Volume average particle diameter ($\mu$m) | Ignition loss (%) | Amount of filling material (%) | Volume average particle diameter ($\mu$m) | Bending strength in lamination direction (MPa) | Strength evaluation criteria | Precision of forming (mm) | Precision evaluation criteria |
| Example 1 | Block PP (AW564) | Talcan Pawder PK-S | 0.649 | 11.7 | 6.83 | 10 | 80 | 30 | B | 0.16 | B |
| Example 2 | Block PP (AW564) | Talcan Pawder PK-C | 0.651 | 12.1 | 5.7 | 10 | 83 | 32 | B | 0.15 | B |
| Example 3 | Block PP (AW564) | GHL10 | 0.643 | 8 | 5.3 | 10 | 76 | 35 | A | 0.12 | B |
| Example 4 | Block PP (AW564) | GHL7 | 0.643 | 5.8 | 5.3 | 10 | 85 | 37 | A | 0.1 | A |
| Example 5 | Block PP (AW564) | GH7 | 0.642 | 5.8 | 5.25 | 10 | 80 | 38 | A | 0.08 | A |
| Comparative Example 1 | Block PP (AW564) | KHP-125 | 0.629 | 7.5 | 6.87 | 10 | 80 | 25 | D | 0.18 | B |
| Comparative Example 2 | Block PP (AW564) | KHP-400 | 0.629 | 14.2 | 6.87 | 10 | 80 | 22 | D | 0.22 | C |
| Comparative Example 3 | Block PP (AW564) | Micron White #5000R | 0.624 | 4.6 | 7.01 | 10 | 80 | 20 | D | 0.12 | B |

From the results of Table 1, in Examples 1 to 5 where each ratio of mass of silicon dioxide to total mass of the main components in the filling material is 0.630 or more, the strength in a lamination direction of the three-dimensional object and the precision of forming were found to be excellent. In addition, when talc having a volume average particle diameter of 6 $\mu$m or less was used as the filling material, the strength in a lamination direction of the three-dimensional object and the precision of forming were particularly found to be excellent.

As described above, the powder of the present disclosure for forming a three-dimensional object includes thermoplastic resin particles; and a filling material including silicon dioxide as one of main components, where a ratio of mass of silicon dioxide to total mass of the main components in the filling material is 0.630 or more. Therefore, the powder of the present disclosure for forming a three-dimensional object can improve the strength in a lamination direction of the three-dimensional object and the precision of forming.

Aspects of the present disclosure are as follows, for example.

<1> A powder for forming a three-dimensional object, the powder including: thermoplastic resin particles; and a filling material including silicon dioxide as one of main components,
wherein a ratio of mass of silicon dioxide to total mass of the main components in the filling material is 0.630 or more.
<2> The powder for forming a three-dimensional object according to <1>,
wherein the ratio of mass of silicon dioxide to total mass of the main components in the filling material is 0.660 or less.
<3> The powder for forming a three-dimensional object according to <1> or <2>,
wherein the main components in the filling material include silicon dioxide, magnesium oxide, aluminum oxide, iron oxide, and calcium oxide.
<4> The powder for forming a three-dimensional object according to any one of <1> to <3>,
wherein the filling material is talc.
<5> The powder for forming a three-dimensional object according to any one of <1> to <4>,
wherein a volume average particle diameter of the filling material is 6 $\mu$m or less.
<6> The powder for forming a three-dimensional object according to any one of <1> to <5>,
wherein an ignition loss obtained when the filling material is heated at 1,000°C for 2 hours is 6.85% or less.
<7> The powder for forming a three-dimensional object according to any one of <1> to <6>,
wherein the thermoplastic resin particles include the filling material.
<8> A forming device for forming a three-dimensional object by laminating a cured layer obtained by curing a powder for forming a three-dimensional object, the forming device including:

a storage tank storing the powder for forming a three-dimensional object according to any one of <1> to <7>;
a supply unit configured to supply the powder for forming a three-dimensional object stored in the storage tank to a layer formation region;
a layer formation unit configured to form a layer including the powder for forming a three-dimensional object supplied to the layer formation region; and
a curing unit configured to cure the layer.

<9> A method for forming a three-dimensional object by laminating a cured layer obtained by curing a powder for forming a three-dimensional object, the method including:

forming a layer including the powder for forming a three-dimensional object according to any one of <1> to <7>; and
curing the layer,
the forming and the curing being repeatedly performed.

<10> A powder including:

thermoplastic resin particles; and
a filling material including silicon dioxide as one of main components,
wherein a ratio of mass of silicon dioxide to total mass of the main components in the filling material is 0.630 or more.

<11> The powder according to <10>,
wherein the ratio of mass of silicon dioxide to total mass of the main components in the filling material is 0.660 or less.
<12> The powder according to <10> or <11>,
wherein the main components in the filling material include silicon dioxide, magnesium oxide, aluminum oxide, iron oxide, and calcium oxide.

<13> The powder according to any one of <10> to <12>,
wherein the filling material is talc.
<14> The powder according to any one of <10> to <13>,
wherein a volume average particle diameter of the filling material is 6 $\mu$m or less.
<15> The powder according to any one of <10> to <14>,
wherein an ignition loss obtained when the filling material is heated at 1,000°C for 2 hours is 6.85% or less.
<16> The powder according to any one of <10> to <15>,
wherein the thermoplastic resin particles include the filling material.

The powder for forming a three-dimensional object according to any one of <1> to <7>, the forming device according to <8>, the forming method according to <9>, and the powder according to any one of <10> to <16> can solve the aforementioned existing problems in the art and can achieve the object of the present disclosure.

**Claims**

1.  A powder for forming a three-dimensional object, the powder comprising:

    thermoplastic resin particles; and
    a filling material including silicon dioxide as one of main components,
    wherein a ratio of mass of silicon dioxide to total mass of the main components in the filling material is 0.630 or more.

2.  The powder for forming a three-dimensional object according to claim 1,
    wherein the ratio of mass of silicon dioxide to total mass of the main components in the filling material is 0.660 or less.

3.  The powder for forming a three-dimensional object according to claim 1 or 2,
    wherein the main components in the filling material include silicon dioxide, magnesium oxide, aluminum oxide, iron oxide, and calcium oxide.

4.  The powder for forming a three-dimensional object according to any one of claims 1 to 3,
    wherein the filling material is talc.

5.  The powder for forming a three-dimensional object according to any one of claims 1 to 4,
    wherein a volume average particle diameter of the filling material is 6 $\mu$m or less.

6.  The powder for forming a three-dimensional object according to any one of claims 1 to 5,
    wherein an ignition loss obtained when the filling material is heated at 1,000°C for 2 hours is 6.85% or less.

7.  The powder for forming a three-dimensional object according to any one of claims 1 to 6,
    wherein the thermoplastic resin particles include the filling material.

8.  A forming device for forming a three-dimensional object by laminating a cured layer obtained by curing a powder for forming a three-dimensional object, the forming device comprising:

    a storage tank storing the powder for forming a three-dimensional object according to any one of claims 1 to 7;
    a supply unit configured to supply the powder for forming a three-dimensional object stored in the storage tank to a layer formation region;
    a layer formation unit configured to form a layer including the powder for forming a three-dimensional object supplied to the layer formation region; and
    a curing unit configured to cure the layer.

9.  A method for forming a three-dimensional object by laminating a cured layer obtained by curing a powder for forming a three-dimensional object, the method comprising:

    forming a layer including the powder for forming a three-dimensional object according to any one of claims 1 to 7; and
    curing the layer,

the forming and the curing being repeatedly performed.

10. A powder comprising:

thermoplastic resin particles; and
a filling material including silicon dioxide as one of main components,
wherein a ratio of mass of silicon dioxide to total mass of the main components in the filling material is 0.630
or more.

# FIG. 1

# FIG. 2A

# FIG. 2B

# FIG. 3A

# FIG. 3B

Europäisches
Patentamt

European
Patent Office

Office européen
des brevets

# EUROPEAN SEARCH REPORT

**Application Number**

EP 19 20 5250

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 100554 A (KANEKA CORP) 23 May 2013 (2013-05-23) | 1-4,6,7, 10 | INV. B29C64/153 |
| Y | * paragraphs [0001], [0080] * | 5 | B33Y10/00 B33Y30/00 |
| X | JP 2009 167236 A (KANEKA CORP) 30 July 2009 (2009-07-30) * paragraphs [0001], [0116] * | 1-4,6,7, 10 | B33Y70/10 C08K3/34 C08L53/00 C08L23/12 |
| X | JP 5 220486 B2 (KANEKA CORP) 26 June 2013 (2013-06-26) * paragraphs [0001], [0002], [0080] * | 1-4,6,7, 10 | B29C70/58 B29K509/00 |
| X | US 2016/333190 A1 (BRULE BENOIT [FR] ET AL) 17 November 2016 (2016-11-17) * paragraphs [0004], [0005], [0049] * * claims 1, 5, 8 * | 1,8-10 | |
| X | CN 107 011 650 A (BEIJING ADVANCED MAT & ADDITIVE MANUFACTURING INSTITUTE) 4 August 2017 (2017-08-04) | 8 | |
| Y | * paragraph [0040] * * claims 1, 3, 5 * | 5 | TECHNICAL FIELDS SEARCHED (IPC) B29C B33Y C22C B22F C08K C09J C08L B29K |

The present search report has been drawn up for all claims

| Place of search | Date of completion of the search | Examiner |
|---|---|---|
| The Hague | 23 April 2020 | Schmitt, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 5250

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2020

| Patent document cited in search report | | Publication date | Patent family member(s) | | Publication date |
|---|---|---|---|---|---|
| JP 2013100554 | A | 23-05-2013 | JP | 5591965 B2 | 17-09-2014 |
| | | | JP | 2013100554 A | 23-05-2013 |
| JP 2009167236 | A | 30-07-2009 | JP | 5553476 B2 | 16-07-2014 |
| | | | JP | 2009167236 A | 30-07-2009 |
| JP 5220486 | B2 | 26-06-2013 | JP | 5220486 B2 | 26-06-2013 |
| | | | JP | 2009298931 A | 24-12-2009 |
| US 2016333190 | A1 | 17-11-2016 | CN | 106103564 A | 09-11-2016 |
| | | | EP | 3083793 A1 | 26-10-2016 |
| | | | FR | 3015506 A1 | 26-06-2015 |
| | | | JP | 6591420 B2 | 16-10-2019 |
| | | | JP | 2017508019 A | 23-03-2017 |
| | | | RU | 2016129183 A | 25-01-2018 |
| | | | US | 2016333190 A1 | 17-11-2016 |
| | | | US | 2019040269 A1 | 07-02-2019 |
| | | | WO | 2015092272 A1 | 25-06-2015 |
| CN 107011650 | A | 04-08-2017 | NONE | | |

EPO FORM P0459

For more details about this annex : see Official Journal of the European Patent Office, No. 12/82

**EP 3 659 785 A1**

REFERENCES CITED IN THE DESCRIPTION

**Patent documents cited in the description**

- JP 2016016568 A
- WO 2008057844 A
- US 6531086 B